# FASCICULE DE BREVET EUROPEEN

(11) **EP 3 063 111 B1**
(45) Date de publication et mention de la délivrance du brevet: **13.09.2023**
(21) Numéro de dépôt: 14805182.4
(22) Date de dépôt: 28.10.2014
(51) Int. Cl.: C05D 9/00, C05F 3/00, C05F 11/00, C05F 17/00

(54) **PROCÉDÉ DE FABRICATION D'UNE COMPOSITION POUR FERTILISER UNE TERRE AGRICOLE ET L'UTILISATION DE LADITE COMPOSITION**
VERFAHREN ZUR HERSTELLUNG EINER ZUSAMMENSETZUNG ZUR DÜNGUNG VON LANDBÖDEN UND VERWENDUNG DER BESAGTEN ZUSAMMENSETZUNG
METHOD FOR PRODUCING A COMPOSITION FOR FERTILIZING AGRICULTURAL LAND AND THE USE OF SAID COMPOSITION

(30) Priorité: 28.10.2013 FR 1360495
(43) Date de publication de la demande: 07.09.2016
(73) Titulaire: Mansour, Rawya Lofty, 98000 Monaco (MC)
(72) Inventeur: MANSOUR, Rawya Lotfy, MC-98000 Monaco (MC); FIKRY, Awad, Le Caire (EG)
(74) Mandataire: Hautier IP - MC/EP
(86) Numéro de dépôt international: PCT/EP2014/073075
(87) Numéro de publication internationale: WO 2015/063059

(56) Documents cités:
- WO-A1-2007/083986
- WO-A1-2012/097827
- WO-A2-2007/068248
- CN-A- 102 951 961
- CN-A- 103 274 829
- CN-B- 102 010 257
- DE-C1- 4 444 726
- "Organic fertiliser contg. cereal straw in animal manure - opt. together with zeolite and bentonite, with improved nutrient availability, dispersion properties, etc", DERWENT, 29 septembre 1988 (1988-09-29), XP002248330,

## Description

La présente invention concerne un procédé de fabrication d'une composition pour fertiliser une terre agricole et l'utilisation de ladite composition.

L'invention trouvera son application dans l'agriculture et notamment pour augmenter les rendements des sols peu fertiles.

Les pays dont une majorité du territoire est constituée par des déserts font face à des problèmes pour nourrir leurs populations du fait du manque d'eau pour cultiver et de la prédominance de déserts limitant les terres cultivables. Des nouvelles terres agricoles sont gagnées sur les sols pauvres et sablonneux des déserts qui forment la plupart des pays d'Afrique du Nord et du Moyen Orient. Par exemple en Egypte, des terrains de part et d'autre de la vallée du Nil sont transformés en terres cultivables, notamment dans le delta du Nil, mais les quantités de matières organiques sont particulièrement faibles, inférieures à 0,1% et les rendements sont médiocres.

Ces terres doivent être enrichies par divers engrais mais la nature sableuse des sols empêche leur rétention. Ils sont emportés par l'eau d'irrigation, empêchant des bons rendements et causant des dégâts écologiques en polluant les nappes phréatiques. Les déserts sont parmi les seules terres qui ne sont pas polluées à cause du surpâturage et de l'utilisation extensible d'engrais chimiques. Il est donc essentiel de respecter ces terres et de limiter leur pollution.

Le demandeur a testé l'objet de sa demande de brevet WO 2012/097827 en proposant une solution pour augmenter la production d'une terre par une composition fertilisante.

Toutefois, le demandeur s'est aperçu que cette composition était particulièrement chère pour les agriculteurs, notamment des pays du sud en développement vivant sous le seuil de pauvreté, plus particulièrement au sud de l'Egypte. Cette composition est apparue également difficile à mettre en oeuvre sans équipements spéciaux. L'augmentation du prix de l'énergie fossile et de ce fait des engrais chimiques issus du pétrole, crée des instabilités dans ces pays qui n'arrivent pas à devenir autonomes quant au besoin d'alimentation de leurs habitants. D'autres compositions fertilisantes employant des excréments d'animaux et des matériaux cellulosiques sont connues de la demande de brevet WO 2007/068248 A2 par exemple.

La présente invention propose un procédé de fabrication d' une composition pour fertiliser une terre agricole qui peut être produite à moindre coût et qui donne des résultats très satisfaisants.

A cet effet, la composition obtenue à partir du procédé de l'invention utilise majoritairement des composants recyclés et peu coûteux. En particulier, l'invention comprend l'utilisation des déchets issus des animaux mais aussi des végétaux comme source principale des macros et micro nutriments nécessaires en agriculture. La composition selon l'invention ne porte pas atteinte à l'environnement, notamment elle ne dégrade pas les sols et l'environnement (eco-friendly en anglais).

La composition inclut de manière très avantageuse de la bentonite, argile colloïdale ayant une très forte capacité de rétention d'eau. La bentonite possède une capacité d'échange de cation très forte en comparaison aux autres argiles. La bentonite est un produit abondant en Egypte et très accessible financièrement. La bentonite est un produit naturel présent dans les déserts. Toutefois, elle n'est pas connue dans le domaine agricole.

Avantageusement, l'invention comprend l'utilisation des micro et macronutriments essentiels qui sont préférentiellement ajoutés sous forme de minerais.

Avantageusement, des algues sont introduites dans la composition. Les algues sont avantageusement une source d'azote importante.

Préférentiellement, des micro-organismes efficaces (EM) sont inclus dans la composition de sorte à faciliter la décomposition de la matière organique.

La composition est donc facilement formulée avec des constituants abondants.

La composition obtenue selon l'invention comprend des déchets animal et végétal. Le recyclage de ces déchets agricoles contribue à améliorer la pollution atmosphérique et des sols en limitant les brûlages des déchets qui sont nocifs pour l'environnement et la santé humaine. L'utilisation de la présente composition s'inscrit dans une démarche de de développement durable et de technologie verte.

En outre, la composition obtenue selon l'invention présente une fermentation rapide et facile sans nécessiter d'appareillages spécifiques De manière surprenante, cette fermentation accélérée, par rapport aux compositions de l'art antérieur, peut être due à la quantité importante de bentonite dans la composition, au moins 10%, préférentiellement 12 à 15%. Cette proportion plus élevée est particulièrement innovante car la présence d'argile en grande quantité n'est pas une démarche classique dans les fertilisants. Une synergie entre la bentonite et les micro-organismes présents dans la composition peut expliquer ces bons résultats de fermentation.

Il convient de rappeler que l'invention concerne un procédé de fabrication d' une composition pour fertiliser une terre agricole caractérisée par le fait que la composition ainsi obtenue comprend : des excréments d'animaux, des déchets végétaux, de la bentonite en quantité supérieure à 10% en poids de la composition finale, des macronutriments essentiels, des micronutriments essentiels, du soufre agricole, des algues et des micro-organismes efficaces.

Suivant des variantes préférées mais non limitatives, la composition obtenue selon l'invention est telle que :
- la bentonite représente 10 à 25% du poids de la composition finale, préférentiellement 12 à 15% ;
- les excréments d'animaux sont des excréments de poulet ;
- les déchets végétaux comportent du compost et/ou des déchets végétaux non fermentés, par exemple de la paille de riz ou des déchets agricoles hachés ;
- le ratio carbone:azote est de 14:1 après 21 jours de fermentation ;
- les micronutriments sont choisis parmi le sulfate ferreux, le zinc, le manganèse, le sulfate de cuivre ;
- les macronutriments sont choisis parmi le superphosphate, le nitrate d'ammonium, le sulfate de potassium, le sulfate de magnésium ;
- la capacité d'échange cationique (CEC) de la composition augmente de 80 à 120% après 42 jours de fermentation ;
- la capacité d'échange cationique (CEC) augmente de 100% après 42 jours de fermentation ;
- les excréments d'animaux représentent de 10 à 25% en poids de la composition finale, préférentiellement 10% ;
- les déchets végétaux représentent de 40 à 60%, préférentiellement 47% en poids de la composition finale ;
- le compost représente 10 à 20%, préférentiellement 12% en poids de la composition finale ;
- les déchets végétaux non fermentés représentent de 30 à 40%, préférentiellement 35% du poids de la composition finale ;
- les algues sont ajoutées en quantité de 2 à 3 litres par tonne de composition finale ;
- les micro-organismes efficaces sont ajoutés en quantité de 2 à 3 litres par tonne de la composition finale.
- la composition comprend pour une tonne de composition finale :

| | |
|---|---|
| - excréments d'animaux | 100kg |
| - déchets végétaux | 350kg |
| - compost | 120kg |
| - bentonite | 120kg |
| - super phosphate | 40kg |
| - nitrate ammonium | 60kg |
| - Feldspath | 30kg |
| - zinc | 5kg |
| - manganèse | 5kg |
| - sulfate de cuivre | 3kg |
| - soufre agricole | 30kg |
| - algues | 2,5l |
| - Avantageusement, initiateur de compost | 2,5l |
| - Micro-organismes efficaces (EM) | 2,5l |
| - eau | QSP 1 000 kg |

L'invention concerne un procédé de fabrication de la composition pour transformer mécaniquement et microbiologiquement les constituants en une composition efficace pour fertiliser les sols. Le présent procédé contribue à accélérer de manière surprenante les délais de fermentation.

L'invention concerne un procédé de fabrication de la composition pour fertiliser une terre agricole caractérisé par le fait qu'il comprend les étapes suivantes :
- découpage des excréments d'animaux et des déchets végétaux en petits morceaux préférentiellement d'une taille de 1 à 2 cm ce qui favorise une fermentation rapide.
   - former dans un contenant étanche à la lumière et à l'air des couches successives d'excréments d'animaux et de déchets végétaux, puis de bentonite mélangée au macro et micronutriments essentiels ;
   - humidifier chaque couche avec de l'eau mélangée aux algues et aux micro-organismes efficaces de sorte à obtenir une humidité de 20 à 25% ;
   - mélanger deux fois par semaine, pendant au moins trois semaines pour la fermentation, en vérifiant l'humidité et la température et en pulvérisant de l'eau si nécessaire pour maintenir une humidité de 20 à 25% et une température de 40 à 55°C.

Avantageusement, la moitié de la quantité des micro-organismes efficaces est mélangée à l'eau pour humidifier chaque couche et l'autre moitié de la quantité des micro-organismes efficaces est mélangée à l'eau d'irrigation de la terre amendée lors du premier arrosage.

Un autre aspect de l'invention concerne l'utilisation d'une composition pour fertiliser une terre agricole en mélangeant 5 à 7 tonnes de la composition par feddan de terre selon le type de sol et de culture.

Avantageusement, la terre est retournée sur 30 cm de profondeur.

Suivant un autre aspect, l'invention concerne un procédé d'amendement de terre agricole caractérisé en ce qu'il comprend les étapes suivantes :
- disperser 5 à 7 tonnes de composition telle que décrite précédemment sur 1 feddan de terre ;
- retourner la terre ;
- irriguer la terre amendée avec de l'eau et 1 à 1,5 litre de micro-organismes efficaces.

D'autres buts et avantages apparaitront au cours de la description qui suit un mode de réalisation préféré.

Selon l'invention, les déchets issus des animaux sont préférentiellement des excréments d'animaux. Préférentiellement, les excréments d'animaux sont du fumier de poulet, de cheval ou de vache qui est très riche en matière organique et en macronutriments tel l'azote. D'autres types de fumiers peuvent être utilisés, par exemple du fumier de cheval. Leur quantité est comprise avantageusement entre 100 et 250kg, préférentiellement 100kg par tonne de composition.

Les déchets végétaux comprennent des déchets fermentés tels du compost et/ou des déchets non fermentés. Préférentiellement, les deux sont mélangés de sorte à apporter des micro-organismes spécifiques de la décomposition des végétaux. Les végétaux non fermentés sont par exemple de la paille de riz, plants de maïs, branches de palmier ou canne à sucre ou autres déchets agricoles. Préférentiellement, la composition comprend 300 à 400kg de déchets végétaux par tonne de composition, plus précisément 350kg. Selon un mode de réalisation préféré, la composition comprend également du compost par exemple en quantité comprise entre 150 et 200kg, préférentiellement 120kg. Le recyclage des déchets végétaux limitent la pollution des nappes phréatiques et de l'air.

De manière avantageuse, la bentonite est ajoutée à la composition dans des quantités relativement élevées de l'ordre de 100 à 250kg, préférentiellement 120kg pour une tonne de composition. Le pourcentage élevé de bentonite supérieur à 10%, préférentiellement supérieur ou égal à 12% permet d'obtenir une composition dont les macronutriments ainsi que l'eau sont retenus par la bentonite et sont donc disponibles pour les végétaux. La bentonite semble également constituer une structure essentielle au développement de micro-organismes et accélérer ainsi la fermentation de la composition.

Les algues contenues dans la composition selon l'invention sont des algues préférentiellement riches en azote. On entend par riche en azote que leur teneur en azote est supérieure à 1,5% du poids sec, par exemple 1,8 % pour les cyanobactéries ou plus de 2% pour les algues brunes Phaeophyceae.

Ces algues sont préférentiellement un mélange d'extraits de culture de cyanobactéries tels que : Nostoc sp. ; Anabeana sp. Ces cyanobactéries secrètent des éléments utiles pour l'enrichissement des sols et la croissance des végétaux. Le mélange d'algues peut également comprendre des Phaeophyceae ou algues brunes. La composition selon l'invention est ainsi particulièrement riche en azote, macronutriment essentiel pour la croissance des végétaux. Les algues sont ajoutées dans la composition en quantité de 2 à 3 litres, préférentiellement 2,5 litres par tonne de composition La densité de la solution d'algues est préférentiellement de l'ordre de 1,5g/cm³.

La composition comprend des micro-organismes efficaces (EM en anglais pour *Efficient Micro-organisme*)*.* Ces micro-organismes efficaces peuvent comprendre jusqu'à 80 sortes différentes réparties essentiellement en 5 familles ; des bactéries d'acide lactique, des levures, des actinomycètes, des bactéries photosynthétiques, des moisissures fermentantes. Les micro-organismes augmentent la disponibilité des micros et macronutriments essentiels. Selon l'invention, la quantité de micro-organismes efficaces dans la composition est comprise entre 2 et 3 litres, préférentiellement 2,5 litres par tonne de composition. Avantageusement, les micro-organismes EM sont apportés en deux étapes : 50% de la quantité totale est ajoutée à la composition selon le procédé de fabrication décrit ci-après, le reste de la quantité de micro-organismes, soit 50%, est mélangé à l'eau d'irrigation utilisée lors du premier arrosage de la terre amendée permettant une meilleure disponibilité des micronutriments et macronutriments. Préférentiellement, 1 litre de micro-organismes est mélangé à 50 litres d'eau. De plus, l'apport des micro-organismes efficaces directement au niveau des racines limitent le développement de maladies au niveau des racines.

Le déposant s'est aperçu que pour la fermentation initiale, une plus faible quantité de micro-organismes était suffisante et qu'un nouvel apport de micro-organismes EM lors de la première irrigation permettait de redémarrer les processus de transformation de la matière organique directement in situ dans la terre amendée.

Selon un mode de réalisation avantageux, la composition comprend un initiateur au compost (« compost starter » en anglais). Cet initiateur est un mélange d'actinomycètes, de bactéries et de champignons, par exemple Trichoderma harzianum, facilitant la décomposition de la cellulose et le processus de fermentation accélérée.

Le soufre agricole est du soufre sous forme micronisée qui est facilement assimilable en agriculture. Le soufre est essentiel pour la croissance des végétaux et joue également un rôle de fongicide. Le soufre est apporté dans la composition à hauteur de 20 à 40kg, préférentiellement de 30kg par tonne de composition.

La composition est préférentiellement riche en macronutriments tels l'azote, le phosphore, le potassium et le magnésium.

Les macronutriments ajoutés à la composition sont préférentiellement issus du superphosphate et du feldspath. Un exemple avantageux est de 40kg de superphosphate et 30kg de feldspath. Les macronutriments sont par exemple du phosphate, du nitrate d'ammonium, du sulfate de potassium, et du sulfate de magnésium. A titre avantageux, leurs quantités respectives pour une tonne de composition est de 25 à 35kg préférentiellement 30kg de super phosphate ; 50 à 70kg préférentiellement 60kg de nitrate d'ammonium ; 25-35 préférentiellement 30kg de sulfate de potassium ; 8-12kg préférentiellement 10kg de sulfate de magnésium.

La composition est préférentiellement riche en micronutriments tels le fer, le zinc, le manganèse, le cuivre.

Les micronutriments ajoutés à la composition sont préférentiellement du sulfate ferreux, du zinc, du manganèse et du sulfate de cuivre avantageusement en quantité respective de 10, 5, 5 et 3kg pour une tonne de composition.

De l'eau est ajoutée à la composition de sorte à humidifier l'ensemble. La quantité d'eau ajoutée est définie pour atteindre 1 000kg. Par exemple, le pourcentage d'humidité est de 20 à 25%, préférentiellement 23%.

Pour fabriquer la composition selon l'invention, un procédé de fabrication faisant également l'objet de l'invention est mis en oeuvre. Le procédé selon l'invention ne requiert aucun outil spécifique. Il peut ainsi être aisément mis en place dans des exploitations agricoles classiques.

Le procédé de fabrication permet avantageusement une fermentation de la composition pour favoriser la disponibilité des nutriments. Ainsi, lorsque la composition est utilisée sur une terre, elle est rapidement efficace. Le procédé selon l'invention permet de manière surprenante une fermentation rapide, contrairement aux procédés déjà connus. En effet, avec le présent procédé, la durée de fermentation est d'au moins vingt-et-un jours, contrairement aux procédés antérieurs avec au moins cent vingt jours de fermentation.

Selon le procédé, les excréments d'animaux et les déchets végétaux sont broyés pour se présenter sous forme de petits morceaux, préférentiellement de taille de 1 à 2 cm. Ces éléments sont placés dans un conteneur étanche à la lumière et à l'air, par exemple un conteneur plastique noir ou plus simplement une bâche plastique. Les excréments d'animaux et les déchets végétaux sont avantageusement placés en couche, en alternance avec une couche de bentonite mélangée aux macros et micronutriments essentiels. Préférentiellement, chaque couche mesure de 5 à 20 cm, plus précisément de 15 à 20 cm. Préférentiellement, l'ensemble mesure de 1 m à 1,5m de hauteur.

Chaque couche est avantageusement humidifiée avec de l'eau, des algues et des micro-organismes efficaces. L'humidité de la composition est préférentiellement de 20 à 25%.

Pendant au moins trois semaines, la composition est mélangée deux fois par semaine, la température et l'humidité sont contrôlées pour être maintenues à température de 40 à 55°C et une humidité de 20 à 25%. Cette étape peut durer jusqu'à six semaines.

Le procédé selon l'invention entraîne la fermentation de la composition ainsi que la transformation sous forme non ionique des macronutriments facilitant leur utilisation par des végétaux.

La bentonite joue un rôle important en captant les macro-organismes par exemple l'azote, sous forme d'ammonium NH₄ ou de nitrate NO₃, se transforme en forme absorbable captée par la bentonite.

Le ratio carbone/azote permet de surveiller le bon déroulement de la fermentation. Ainsi, la composition selon l'invention possède un ratio C:N élevé par exemple de l'ordre de 31:1 au début du procédé de fabrication. Ce ratio chute à 14:1 et se stabilise à ce niveau quand la fermentation est terminée.

Selon l'invention, au bout de 21 jours, le ratio C:N chute et se stabilise. A 42 jours, le ratio est toujours stable.

Le procédé selon l'invention permet également d'obtenir une composition particulièrement efficace avec une capacité d'échange de cation (CEC) comprise entre 95meq/100g d'échantillon.

Les macros et micronutriments sont ainsi aptes à être utilisés par les végétaux et ne sont donc pas entraînés par les eaux d'irrigation pouvant polluer l'environnement.

En outre, la sélection de la bentonite permet de réduire les besoins en eau des terres amendées. L'eau est captée par la bentonite et reste à disposition des végétaux sans nécessiter d'arrosage répété.

La composition selon l'invention est utilisée directement sur la terre à amender. Préférentiellement, 5 à 7 tonnes de composition sont nécessaires pour fertiliser un feddan de terre selon le type de terre et de plantation. La composition est étendue sur la terre puis avantageusement la terre est retournée sur 30cm de profondeur. Préférentiellement, la quantité restante de micro-organismes efficaces (EM) est mélangée à de l'eau pour la première irrigation de la terre amendée.

La composition selon l'invention a été utilisée de manière confidentielle dans un champ appartenant au demandeur.

Les rendements de courgettes ont été augmentés de 44%, par rapport aux rendements avec un fertilisant organique de l'état de la technique. Le rendement est augmenté de près de 60% pour la culture d'oignons, 95% pour la culture de gombo et 63% pour la courge.

De plus, les quantités de composition fertilisante sont moitiés moins qu'avec un fertilisant classique.

La composition selon l'invention a également permis de réduire de 27 à 33%, le volume d'eau nécessaire pour atteindre ces rendements. L'économie d'eau atteint 60% avec la mise en place d'un goutte-à-goutte.

La composition de l'invention a été analysée avant le procédé de fabrication et le début de la fermentation à T = 0 :

| | |
|---|---|
| Couleur | Brun - jaune |
| Odeur | Mauvaise odeur |
| Densité (Kg/m³) | 814 |
| pH | 7,6 |
| Pourcentage de saturation (%) | 207 |
| Humidité (%) | 35,4 |
| Conductivité électrique (deciSiemens/m) | 6,30 |
| Matière organique (%) | 48,7 |
| Carbone organique (%) | 37,5 |
| Cendre (%) | 70,4 |
| Azote (% ou ppm) | 1,3 ou 13000 |
| Ammonium (%) | 2642 |
| Nitrate(%) | 196 |
| Ratio C:N | 31:1 |
| Capacité d'échange cationique (meq/100g) | 47,6 |
| Phosphore (%) | 0,62 |
| Potassium (%) | 1,36 |
| Fer (ppm) | 943 |
| Manganèse (ppm) | 306 |
| Zinc (ppm) | 185 |
| Cuivre (ppm) | 42 |

Puis 21 jours, après le début du procédé : T = 21 jours

| | |
|---|---|
| Couleur | Brun - jaune |
| Odeur | Sans odeur |
| Densité (Kg/m³) | 740 |
| pH | 7,6 |
| Pourcentage de saturation (%) | 196 |
| Humidité (%) | 25 |
| (Conductivité électrique (deciSiemens/m) | 5,29 |
| Matière organique (%) | 28 |
| Carbone organique (%) | 16,3 |
| Cendre (%) | 72 |
| Azote (% ou ppm) | 1,17 ou 11700 |
| Ammonium (%) | 2655 |
| Nitrate(%) | 159 |
| Ratio C:N | 14:1 |
| Capacité d'échange cationique | 65,5 |
| (meq/100g) | |
| Phosphore (%) | 0,58 |
| Potassium (%) | 1,07 |
| Fer (ppm) | 914 |
| Manganèse (ppm) | 246 |
| Zinc (ppm) | 157 |
| Cuivre (ppm) | 37 |

Puis 42 jours après le début du procédé : T = 42 jours

| | |
|---|---|
| Couleur | Brun foncé |
| Odeur | Sans odeur |
| Densité (Kg/m³) | 635 |
| pH | 7,33 |
| Pourcentage de saturation (%) | 234 |
| Humidité (%) | 23,3 |
| Conductivité électrique (deciSiemens/m) | 4,71 |
| Matière organique (%) | 25,8 |
| Carbone organique (%) | 19,5 |
| Cendre (%) | 65,8 |
| Azote (% ou ppm) | 1,35 ou 13500 |
| Ammonium (%) | 2241 |
| Nitrate(%) | 104,2 |
| Ratio C:N | 14:1 |
| Capacité d'échange cationique (meq/100g) | 88,2 |
| Phosphore (%) | 0,62 |
| Potassium (%) | 1,12 |
| Fer (ppm) | 1037 |
| Manganèse (ppm) | 319 |
| Zinc (ppm) | 160 |
| Cuivre (ppm) | 60 |

## Revendications

1. Procédé de fabrication d'une composition pour fertiliser une terre agricole comprenant :
- des excréments d'animaux représentant de 10 à 25% en poids de la composition finale, préférentiellement 10%,
- des déchets végétaux comportant du compost représentant 10 à 20%, préférentiellement 12% en poids de la composition finale et/ou des déchets végétaux non fermentés représentent de 30 à 40%, préférentiellement 35% en poids de la composition finale,
- de la bentonite en quantité supérieure à 10% en poids de la composition finale ;
- des macronutriments essentiels ;
- des micronutriments essentiels
- du soufre agricole ;
- des algues ;
- des micro-organismes efficaces comprenant jusqu'à 80 sortes différentes réparties en 5 familles ; des bactéries d'acide lactique, des levures, des actinomycètes, des bactéries photosynthétiques, des moisissures fermentantes;
le procédé comprenant les étapes suivantes :
- découpage des excréments d'animaux et des déchets végétaux en petits morceaux, préférentiellement d'une taille de 1 à 2 cm ;
- former dans un contenant étanche à la lumière et à l'air des couches successives d'excréments d'animaux et de déchets végétaux, puis de bentonite mélangée au macro et micronutriments essentiels, ;
- humidifier chaque couche avec de l'eau mélangée aux algues et aux micro-organismes efficaces de sorte à obtenir une humidité de 20 à 25%
- mélanger deux fois par semaine, pendant au moins trois semaines pour la fermentation, en vérifiant l'humidité et la température et en pulvérisant de l'eau si nécessaire pour maintenir une humidité de 20 à 25% et une température de 40 à 55°C.

2. Procédé selon la revendication précédente dans lequel la moitié de la quantité des micro-organismes efficaces est mélangée à l'eau pour humidifier chaque couche et l'autre moitié de la quantité des micro-organismes efficaces est mélangée à l'eau d'irrigation de la terre amendée lors du premier arrosage.

3. Procédé selon l'une quelconque des revendications précédentes dans lequel on utilise une quantité de la bentonite représentant 10 à 25% du poids de la composition finale, préférentiellement 12 à 15%.

4. Procédé selon l'une quelconque des revendications précédentes dans lequel les excréments d'animaux utilisés sont des excréments de poulet.

5. Procédé selon l'une quelconque des revendications précédentes dans lequel les micronutriments sont choisis parmi le sulfate ferreux, le zinc, le manganèse, le sulfate de cuivre.

6. Procédé selon l'une quelconque des revendications précédentes dans lequel les macronutriments sont choisis parmi le superphosphate, le nitrate d'ammonium, le sulfate de potassium, le sulfate de magnésium.

7. Procédé selon l'une quelconque des revendications précédentes dans lequel les algues sont ajoutées en quantité de 2 à 3 litres par tonne de composition finale.

8. Procédé selon l'une quelconque des revendications précédentes dans lequel les micro-organismes efficaces sont ajoutés en quantité de 2 à 3 litres par tonne de la composition finale.

9. Procédé selon l'une quelconque des revendications précédentes dans lequel les quantités utilisées pour une tonne de composition finale :
| | |
|---|---|
| - excréments d'animaux | 100kg |
| - déchets végétaux | 350kg |
| - compost | 120kg |
| - bentonite | 120kg |
| - super phosphate | 40kg |
| - nitrate ammonium | 60kg |
| - Feldspath | 30kg |
| - zinc | 5kg |
| - manganèse | 5kg |
| - sulfate de cuivre | 3kg |
| - soufre agricole | 30kg |
| - algues | 2,5l |
| - Micro-organismes Efficaces | 2,5l |
| - initiateur de compost | 2,5l |
| - eau | QSP 1 000 kg |

10. Utilisation d'une composition pour fertiliser une terre agricole en mélangeant 5 tonnes de la composition obtenue par le procédé selon l'une quelconque des revendications précédentes pour 4 200m² (1 feddan) de terre, et dans laquelle la terre est retournée sur 30 cm de profondeur.

11. Procédé d'amendement de terre agricole **caractérisé en ce qu'**il comprend les étapes suivantes :
- disperser 5 à 7 tonnes de composition obtenue par le procédé selon l'une quelconque des revendications 1 à 9 sur 4 200m² (1 feddan) de terre ;
- retourner la terre ;
- irriguer la terre amendée avec de l'eau et 1 à 1,5 litre de micro-organismes efficaces.

## Patentansprüche

1. Verfahren zur Herstellung einer Zusammensetzung zum Düngen von Agrarland, Folgendes umfassend:
- Tierexkremente, die 10 bis 25 Gew.-% der endgültigen Zusammensetzung ausmachen, vorzugsweise 10 %,
- pflanzliche Abfälle, die Kompost enthalten, die 10 bis 20 Gew.-%, vorzugsweise 12 Gew.-% der endgültigen Zusammensetzung ausmachen, und/oder nicht fermentierte pflanzliche Abfälle, die 30 bis 40 Gew.-%, vorzugsweise 35 Gew.-% der endgültigen Zusammensetzung ausmachen,
- Bentonit in einer Menge von mehr als 10 Gew.-% der endgültigen Zusammensetzung;
- essentielle Makronährstoffe;
- essentielle Mikronährstoffe
- landwirtschaftlicher Schwefel;
- Algen;
- effektive Mikroorganismen, die bis zu 80 verschiedene Arten umfassen, die in 5 Familien aufgeteilt sind; Milchsäurebakterien, Hefen, Actinomyceten, Photosynthesebakterien, fermentierende Schimmelpilze;
wobei das Verfahren die folgenden Schritte umfasst:
- Zerschneiden der Tierexkremente und Pflanzenabfälle in kleine Stücke, vorzugsweise mit einer Größe von 1 bis 2 cm;
- Bilden von aufeinanderfolgenden Schichten aus tierischen Exkrementen und pflanzlichen Abfällen in einem licht- und luftdichten Behälter, dann aus Bentonit vermischt mit essentiellen Makro- und Mikronährstoffen, ;
- Befeuchten jeder Schicht mit Wasser, das mit den Algen und den effektiven Mikroorganismen vermischt ist, so dass eine Feuchtigkeit von 20 bis 25 % erreicht wird
- Vermischen, zweimal wöchentlich mindestens drei Wochen lang, für die Fermentation, wobei die Feuchtigkeit und die Temperatur überprüft werden und gegebenenfalls Wasser versprüht wird, um eine Feuchtigkeit von 20 bis 25 % und eine Temperatur von 40 bis 55 °C aufrechtzuerhalten.

2. Verfahren nach dem vorhergehenden Anspruch, wobei die Hälfte der Menge an effektiven Mikroorganismen mit Wasser vermischt wird, um jede Schicht zu befeuchten, und die andere Hälfte der Menge an effektiven Mikroorganismen mit dem Wasser zur Bewässerung der verbesserten Erde bei der ersten Bewässerung vermischt wird.

3. Verfahren nach einem der vorhergehenden Ansprüche, wobei eine Menge des Bentonits verwendet wird, die 10 bis 25 Gew.-% der endgültigen Zusammensetzung, vorzugsweise 12 bis 15 Gew.-% ausmacht.

4. Verfahren nach einem der vorhergehenden Ansprüche, wobei die verwendeten Tierexkremente Hühnerexkremente sind.

5. Verfahren nach einem der vorhergehenden Ansprüche, wobei die Mikronährstoffe aus Eisensulfat, Zink, Mangan, Kupfersulfat ausgewählt sind.

6. Verfahren nach einem der vorhergehenden Ansprüche, wobei die Makronährstoffe aus Superphosphat, Ammoniumnitrat, Kaliumsulfat, Magnesiumsulfat ausgewählt sind.

7. Verfahren nach einem der vorhergehenden Ansprüche, wobei die Algen in einer Menge von 2 bis 3 Litern pro Tonne der endgültigen Zusammensetzung zugesetzt werden.

8. Verfahren nach einem der vorhergehenden Ansprüche, wobei die effektiven Mikroorganismen in einer Menge von 2 bis 3 Litern pro Tonne der endgültigen Zusammensetzung zugesetzt werden.

9. Verfahren nach einem der vorhergehenden Ansprüche, wobei die für eine Tonne der endgültigen Zusammensetzung verwendeten Mengen:
| | |
|---|---|
| - Tierische Exkremente | 100 kg |
| - Pflanzenabfälle | 350 kg |
| - Kompost | 120 kg |
| - Bentonit | 120 kg |
| - Superphosphat | 40 kg |
| - Ammoniumnitrat | 60 kg |
| - Feldspat | 30 kg |
| - Zink | 5 kg |
| - Mangan | 5 kg |
| - Kupfersulfat | 3 kg |
| - landwirtschaftlicher Schwefel | 30 kg |
| - Algen | 2,5 1 |
| - Effektive Mikroorganismen | 2,5 1 |
| - Kompostinitiator | 2,5 1 |
| - Wasser | QSP 1.000 kg |

10. Verwendung einer Zusammensetzung zum Düngen von Ackerland durch Vermischen von 5 Tonnen der Zusammensetzung, die durch das Verfahren nach einem der vorhergehenden Ansprüche erhalten wurde, für 4.200 m² (1 Feddan) Land, und wobei das Land 30 cm tief umgegraben wird.

11. Verfahren zur Verbesserung von landwirtschaftlichem Boden, **dadurch gekennzeichnet, dass** es die folgenden Schritte umfasst:
- Verteilen von 5 bis 7 Tonnen der durch das Verfahren nach einem der Ansprüche 1 bis 9 erhaltenen Zusammensetzung auf 4.200 m² (1 Feddan) Erde;
- Umgraben der Erde;
- Bewässern der verbesserten Erde mit Wasser und 1 bis 1,5 Litern effektiven Mikroorganismen.

## Claims

1. A method of producing a composition for fertilising agricultural land comprising
- animal excrement representing 10 to 25% by weight of the final composition, preferably 10%,
- plant waste including compost representing 10 to 20%, preferably 12% by weight of the final composition and/or unfermented plant waste representing 30 to 40%, preferably 35% by weight of the final composition,
- bentonite in an amount which is greater than 10% by weight of the final composition;
- essential macronutrients;
- essential micronutrients
- agricultural sulphur;
- algae;
- effective microorganisms comprising up to 80 different kinds divided into 5 families; lactic acid bacteria, yeasts, actinomycetes, photosynthetic bacteria, fermenting moulds;
the method comprising the following steps:
- cutting animal excrement and plant waste into small pieces, preferably 1 to 2 cm in size;
- forming, in a light and air-tight container, successive layers of animal excrement and plant waste, then of bentonite mixed with essential macro and micronutrients;
- humidifying each layer with water mixed with algae and effective microorganisms so as to obtain a humidity of 20 to 25%
- mixing twice a week, for at least three weeks for fermentation, by checking the humidity and the temperature and by spraying water if necessary to maintain a humidity of 20 to 25% and a temperature of 40 to 55°C.

2. The method according to the preceding claim, wherein half of the amount of the effective microorganisms is mixed with water to humidify each layer and the other half of the amount of the effective microorganisms is mixed with irrigation water of the amended land during the first watering.

3. The method according to any one of the preceding claims, wherein an amount of bentonite is used representing 10 to 25% of the weight of the final composition, preferably 12 to 15%.

4. The method according to any one of the preceding claims, wherein the used animal excrement is chicken excrement.

5. The method according to any one of the preceding claims, wherein the micronutrients are selected from ferrous sulphate, zinc, manganese, copper sulphate.

6. The method according to any one of the preceding claims, wherein the macronutrients are selected from superphosphate, ammonium nitrate, potassium sulphate, magnesium sulphate.

7. The method according to any one of the preceding claims, wherein the algae are added in an amount of 2 to 3 litres per tonne of final composition.

8. The method according to any one of the preceding claims, wherein the effective microorganisms are added in an amount of 2 to 3 litres per tonne of the final composition.

9. The method according to any one of the preceding claims, wherein the amounts used for one tonne of final composition:
| | |
|---|---|
| - animal excrement | 100kg |
| - plant waste | 350kg |
| - compost | 120kg |
| - bentonite | 120kg |
| - super phosphate | 40kg |
| - ammonium nitrate | 60kg |
| - Feldspar | 30kg |
| - zinc | 5kg |
| - manganese | 5kg |
| - copper sulphate | 3kg |
| - agricultural sulphur | 30kg |
| - algae | 2.51 |
| - effective microorganisms | 2.51 |
| - compost initiator | 2.51 |
| - water | QSP 1000kg |

10. A use of a composition for fertilising agricultural land by mixing 5 tonnes of the composition obtained by the method according to any one of the preceding claims for 4200m² (1 feddan) of land, and wherein the land is turned over 30 cm deep.

11. An agricultural land amendment method **characterised in that** it comprises the following steps:
- dispersing 5 to 7 tons of composition obtained by the method according to any one of claims 1 to 9 over 4200m² (1 feddan) of land;
- turning over the land;
- irrigating the amended land with water and 1 to 1.5 litres of effective microorganisms.
